# EUROPÄISCHE PATENTSCHRIFT

(11) **EP 3 553 564 B1**
(45) Veröffentlichungstag und Bekanntmachung des Hinweises auf die Patenterteilung: **12.05.2021**
(21) Anmeldenummer: 19163963.2
(22) Anmeldetag: 20.03.2019
(51) Int. Cl.: G01S 17/42, G01S 7/481

(54) **ENTFERNUNGSMESSENDER SENSOR**
RANGEFINDING SENSOR
CAPTEUR MESURANT LA DISTANCE

(30) Priorität: 11.04.2018 DE 102018108631
(43) Veröffentlichungstag der Anmeldung: 16.10.2019
(73) Patentinhaber: SICK AG, 79183 Waldkirch (DE)
(72) Erfinder: KIENZLER, Bernd, 79104 Freiburg (DE); WIETHEGE, Friedhelm, 79350 Sexau (DE); SPREEMANN, Dirk, 79244 Münstertal (DE)
(74) Vertreter: Manitz Finsterwald Patent- und Rechtsanwaltspartnerschaft mbB

(56) Entgegenhaltungen:
- EP-A1- 2 645 125
- DE-A1- 4 412 044
- DE-A1-102011 119 707
- DE-A1-102014 114 363
- US-B1- 9 116 243

## Beschreibung

Die vorliegende Erfindung betrifft einen entfernungsmessenden Sensor, der eine Lichtquelle zur Erzeugung eines Sendelichtstrahls, zumindest ein fokussierendes Element zum Erfassen von an einem Objekt reflektiertem oder remittiertem Licht des Sendelichtstrahls und ein Detektionselement aufweist, das zum Detektieren des Lichts vorgesehen ist, das durch das fokussierende Element erfasst wird.

Eine Bauart solcher Sensoren ist ein sogenannter Time-Of-Flight-Sensor oder TOF-Sensor, bei dem die Laufzeit des Lichts ermittelt wird, beispielsweise zwischen der Lichtquelle und dem Detektionselement, um anhand der Laufzeit und der Lichtgeschwindigkeit die Entfernung zwischen dem Sensor und dem Objekt zu messen, an dem der Sendelichtstrahl reflektiert oder remittiert wird. Die Laufzeit kann zum Beispiel die Laufzeit eines Lichtpulses sein. Alternativ wird die Phasenverschiebung eines modulierten Signales ausgewertet, was aber ebenfalls einer zumindest indirekten Bestimmung der Lichtlaufzeit entspricht. Insofern wird auch eine solche Auswertung einer Phasenverschiebung im vorliegenden Text unter den Begriff Lichtlaufzeitbestimmung subsummiert. Solche TOF-Sensoren werden beispielsweise zur Objekterkennung oder in Scannern eingesetzt, wobei ein vorbestimmter Raumbereich beispielsweise mittels eines Lasers als Lichtquelle abgetastet wird.

Bei bekannten TOF-Sensoren sind die Lichtquelle und das fokussierende Element jeweils in einem separaten Sendebereich bzw. Empfangsbereich angeordnet, wobei die Lichtquelle und das fokussierende Element voneinander bestandet sind und der Sendelichtstrahl somit von dem fokussierenden Element und dem Detektionselement innerhalb des Sensors optisch isoliert ist. Aufgrund der räumlichen Trennung des Sende- und Empfangsbereichs, die beispielsweise mit einem Trennsteg erreicht wird, wird ein solcher Sensor auch als ein Sensor mit "Doppelauge" bezeichnet.

Bei solchen Sensoren erstreckt sich der Trennsteg in der Regel jedoch nur bis zu einer Frontscheibe des Sensors, die ein Gehäuse des Sensors gegenüber dem Außenraum abschließt. Durch die Frontscheibe verlaufen somit sowohl der Sendelichtstrahl als auch ein Empfangspfad des Lichts, das mittels des fokussierenden Elements erfasst werden soll. Insbesondere dann, wenn die räumliche Distanz zwischen dem Sendelichtstrahl und dem fokussierenden Element gering ist, kann es über die Frontscheibe zu einem optischen Übersprechen zwischen dem Sendelichtstrahl und dem fokussierenden Element kommen. Dabei gelangt Licht des Sendelichtstrahls direkt über die Frontscheibe zum fokussierenden Element und damit zum Detektionselement des Sensors, ohne dass es zuvor an einem Objekt außerhalb des Sensors reflektiert wurde. Dieses Übersprechen verfälscht das Messsignal, das mittels des Detektionselements generiert wird, und führt zu systematischen Messfehlern.

Um das Übersprechen zwischen Licht aus dem Sendelichtstrahl und dem fokussierenden Element über die Frontscheibe zu verringern, ist entweder das fokussierende Element in Richtung der Frontscheibenerstreckung möglichst weit entfernt vom Sendelichtstrahl angeordnet, oder es sind zwei separate Frontscheiben für den Sende- und den Empfangsbereich des Sensors vorgesehen. In beiden Fällen tritt ein Triangulationseffekt auf, wobei zwei Seiten des Dreiecks durch den Sendelichtstrahl und den Empfangspfad zwischen dem Objekt und dem Sensor gebildet sind und die dritte Seite des Dreiecks dem Abstand zwischen dem Brennpunkt des fokussierenden Elements und dem Sendelichtstrahl entspricht.

Eine solche Triangulation bewirkt, dass ein Lichtfleck, der mittels des fokussierenden Elements durch das Erfassen und Fokussieren des vom Objekt reflektierten oder remittierten Lichts auf dem Detektionselement gebildet wird, sich innerhalb eines gewissen Bereichs verschiebt, wenn sich die Entfernung zwischen Objekt und Sensor ändert. Ferner können durch die Triangulation, d.h. durch den stets vorhandenen Neigungswinkel zwischen der Normalen zur Frontscheibe und dem Empfangspfad, Mehrfachstreuungen innerhalb der Frontscheibe auftreten, die einen Störeffekt für das Messsignal des Sensors darstellen.

Wenn das Detektionselement ein Feld von Empfangszellen umfasst, die beispielsweise auf einer quadratischen Fläche angeordnet sind, empfängt ein Teil der Zellen lediglich Streulicht, das nicht wie gewünscht vom Objekt reflektiert oder remittiert wurde. Dadurch verschlechtert sich das Signal-Rauschverhältnis des vom Detektionselement erzeugten Messsignals. Aufgrund der Verschiebung des Lichtflecks, die durch die Triangulation bei einer Veränderung des Abstands zwischen Objekt und Sensor bedingt ist, ist es ferner nur schwer möglich, das Messsignal, das durch das zu erfassende reflektierte oder remittierte Licht entsteht, nachträglich von dem Signal zu trennen, das durch das unerwünschte Streulicht hervorgerufen wird.

Aus der DE 44 12 044 A1 ist ein entfernungsmessender Sensor mit den Merkmalen gemäß dem Oberbegriff des Anspruchs 1 bekannt.

Die EP 2 645 125 A1 beschreibt einen entfernungsmessenden Sensor mit Merkmalen gemäß einer verwandten Technologie.

In der US 9 116 243 B1 ist ebenfalls ein entfernungsmessender Sensor mit Merkmalen gemäß einer verwandten Technologie beschrieben.

Die DE 10 2011 119 707 A1 beschreibt eine optische Messvorrichtung mit einer Frontscheibe, bei der die Oberfläche eines ersten Abschnitts der Frontscheibe bezüglich der Oberfläche eines zweiten Abschnitts der Frontscheibe geneigt ist. Eine Aufgabe der Erfindung besteht darin, einen Sensor der eingangs genannten Art derart weiterzuentwickeln, dass die Intensität unerwünschten Lichts, das zusätzlich zu dem zu erfassenden reflektierten oder remittierten Licht in den Sensor gelangt, minimiert wird.

Diese Aufgabe wird durch einen entfernungsmessenden Sensor mit den Merkmalen des Anspruchs 1 gelöst. Erfindungsgemäß sind ein Sendelichtstrahl, der mittels einer Lichtquelle des Sensors erzeugt wird, und ein Empfangspfad von Licht des Sendelichtstrahls, das an einem Objekt reflektiert oder remittiert wird und von einem fokussierenden Element des Sensors erfasst wird, vor dem fokussierenden Element im Wesentlichen parallel zueinander ausgerichtet. Der Sendelichtstrahl und der Empfangspfad des zu erfassenden Lichts vor dem fokussierenden Element sind vorzugsweise vollständig parallel zueinander ausgerichtet.

Der erfindungsgemäße Sensor umfasst ferner ein Detektionselement zum Detektieren des durch das fokussierende Element erfassten Lichts und eine Auswerteeinheit, die ausgebildet ist, die Laufzeit des Lichts zwischen der Lichtquelle und dem Detektionselement zu ermitteln. Anhand der ermittelten Laufzeit erfolgt ferner die Bestimmung der Entfernung zwischen dem Sensor und dem Objekt, wie eingangs beschrieben wurde. Die Laufzeit kann zum Beispiel die Laufzeit eines Lichtpulses sein. Alternativ wird die Phasenverschiebung eines modulierten Signales ausgewertet, was aber ebenfalls einer zumindest indirekten Bestimmung der Lichtlaufzeit entspricht. Insofern wird auch eine solche Auswertung einer Phasenverschiebung im vorliegenden Text unter den Begriff Lichtlaufzeitbestimmung subsummiert.

Durch die parallele Ausrichtung des Empfangspfades des zu erfassenden Lichts mit dem Sendelichtstrahl lassen sich die vorstehend beschriebenen Auswirkungen der Triangulation minimieren, d.h. die eingangs genannten Effekte, die durch einen Neigungswinkel zwischen dem Sendelichtstrahl und dem Empfangspfad bedingt sind. Bei der parallelen Ausrichtung des Sendelichtstrahls und des Empfangspfades ist der laterale Abstand zwischen dem Sendelichtstrahl und einem Brennpunkt des fokussierenden Elements vorzugsweise möglichst gering, sodass der Sendelichtstrahl nahezu durch den Brennpunkt bzw. durch einen Fokusbereich des fokussierenden Elements verläuft. Ferner umgibt das fokussierende Element bevorzugt einen Bereich, durch den der Sendelichtstrahl verläuft.

Aufgrund der parallelen Ausrichtung des Sendelichtstrahls und des Empfangspfades zu erfassenden Lichts leuchtet das fokussierende Element einen Lichtfleck auf dem Detektionselement aus, dessen Position sich nahezu nicht verändert, wenn der Abstand zwischen dem Sensor und einem Objekt variiert, an dem der Sendelichtstrahl reflektiert bzw. remittiert wird. Dadurch lässt sich das Detektionselement am Ende des Empfangspfades präzise anordnen bzw. justieren, wodurch die Größe eines Messsignals, das durch das Detektionselement erzeugt wird, maximiert und dessen Signal-Rauschverhältnis verbessert wird.

Ferner ermöglicht die parallele Ausrichtung zwischen dem Sendelichtstrahl und dem Empfangspfad eine große Brennweite des fokussierenden Elements. Dadurch wird der Abtastbereich vergrößert, in welchem eine Entfernungsmessung mittels des Sensors möglich ist. Aufgrund der großen Brennweite kann ein Zwischenbild in einer Ebene zwischen dem fokussierenden Element und dem Detektionselement erzeugt werden. Mittels des Zwischenbildes lässt sich der Strahlengang zwischen dem fokussierenden Element und dem Detektionselement genau festlegen. Dadurch kann wiederum die Intensität des Lichts, welches das Detektionselement erreicht, optimiert werden, sodass das Signal-Rauschverhältnis des Signals, das durch das Detektionselement erzeugt wird, weiter verbessert wird.

Wenn das Detektionselement insbesondere ein Feld bzw. Array von Empfangszellen umfasst, kann auf diesem ein aktiver Bereich bzw. eine "Region of Interest (ROI)" festgelegt werden, da sich die Position des durch das fokussierende Element ausgeleuchteten Bereichs oder Lichtflecks auf dem Detektionselement aufgrund der parallelen Ausrichtung zwischen Sendelichtstrahl und Empfangspfad nicht ändert. Dabei werden nur solche Empfangszellen des Detektionselements aktiviert, die tatsächlich im Bereich des Lichtflecks liegen, während solche Empfangszellen deaktiviert werden, die vom zu erfassenden reflektierten oder remittierten Licht des Sendelichtstrahls nicht erreicht werden, sondern stattdessen nur unerwünschtes Streulicht aufnehmen. Dadurch lässt sich wiederum das Signal-Rauschverhältnis des Messsignals des Sensors verbessern.

Ein zum Beispiel das Detektionselement bildendes Array aus Empfangselementen kann aufgrund der präzisen und nahezu unveränderten Lage des zu detektierenden Lichtpunktes kleiner ausgestaltet sein als vergleichbare Arrays gemäß dem Stand der Technik. Die Anzahl der auszulesenden Empfangselemente ist geringer, wodurch eine Datenreduktion erreicht werden kann. Ferner können die Empfangselemente aufgrund der verringerten Anzahl innerhalb einer kürzeren Zeitspanne ausgelesen werden. Darüber hinaus kann der jeweils aktive Bereich innerhalb des Arrays bei einem Austausch oder einer Veränderung von Komponenten innerhalb des Empfangspfades des zu erfassenden Lichts flexibel an den veränderten Empfangspfad angepasst werden.

Der Sensor weist ferner eine Frontscheibe auf, durch die der Sendelichtstrahl und das zu erfassende reflektierte oder remittierte Licht hindurchtreten. Die Frontscheibe weist dabei ein Trennelement auf, das die Frontscheibe in einen ersten Abschnitt, durch den der Sendelichtstrahl hindurchtritt, und einen zweiten Abschnitt aufteilt, durch den das zu erfassende reflektierte oder remittierte Licht hindurchtritt. Ferner erstreckt sich das Trennelement in Richtung des Sendelichtstrahls über den gesamten Querschnitt der Frontscheibe.

Mittels des Trennelements wird der Empfangspfad des Sensors im Bereich der Frontscheibe gegenüber dem Sendelichtstrahl vollständig optisch isoliert. Dadurch kann das eingangs beschriebene optische Übersprechen von Licht des Sendelichtstrahls über die Frontscheibe in den Empfangspfad hinein verhindert werden. Das Trennelement verhindert folglich, dass ein Teil des Lichts aus dem Sendelichtstrahl über die Frontscheibe direkt auf das fokussierende Element gelangt, ohne wie gewünscht an einem Objekt reflektiert oder remittiert zu werden. Durch die Vermeidung des Übersprechens wird somit wiederum die Intensität von unerwünschtem Streulicht im Empfangspfad verringert, sodass umgekehrt das Signal-Rauschverhältnis des Messsignals weiter verbessert wird.

Die Oberfläche des zweiten Abschnitts der Frontscheibe ist rechtwinklig bezüglich des Sendelichtstrahls angeordnet. Ferner ist die Oberfläche des ersten Abschnitts der Frontscheibe bezüglich der Oberfläche des zweiten Abschnitts geneigt. Dabei weist ein Neigungswinkel zwischen den jeweiligen Oberflächen des ersten bzw. zweiten Abschnitts der Frontscheibe bevorzugt eine Größe von höchstens 5 Grad und besonders bevorzugt eine Größe von höchstens 1 Grad auf.

Durch die Neigung der Oberfläche insbesondere des ersten Abschnitts der Frontscheibe kann eine Reflexion von Licht aus dem Sendelichtstrahl an der Frontscheibe zurück in die Lichtquelle hinein verhindert werden. Dies ist insbesondere vorteilhaft, wenn die Lichtquelle als Laser ausgebildet ist, da eine Beeinflussung der Laserleistung durch eine solche Rückreflexion ausgeschlossen ist, wenn der erste Abschnitt der Frontscheibe geneigt angeordnet ist. Außerdem wird eine möglicherweise vorhandene Monitordiode in einem solchen Laser bei einer Neigung des ersten Abschnitts der Frontscheibe ebenfalls nicht durch eine Rückreflexion beeinflusst. Zusätzlich wird eine Erzeugung von Nebenlichtstrahlen aufgrund einer weiteren Reflexion an glänzenden Teilen innerhalb der Lichtquelle verhindert.

Außerdem ist das fokussierende Element ist als Spiegel ausgebildet, bei dem es sich bevorzugt um einen konkaven Spiegel handelt. Der Spiegel gestattet eine Anpassung des Empfangspfades des zu erfassenden Lichts an einen innerhalb des Sensors vorhandenen Bauraum. Insbesondere kann der Bauraum innerhalb eines Gehäuses des Sensors in Querrichtung zum Sendelichtstrahl mit einem Spiegel besser ausgenutzt werden als z.B. mit einer Linse.

Die Verwendung eines Spiegels gestattet beispielsweise im Vergleich zu einer Linse die Verwendung größerer Brennweiten des fokussierenden Elements. Die Vergrößerung der Brennweite verkleinert umgekehrt einen Sichtbereich, innerhalb dessen das am Objekt reflektierte oder remittierte Licht erfasst wird. Dadurch wird wiederum das Signal-Rauschverhältnis des Messsignals des Sensors verbessert. Vorteilhafte Ausführungsformen der Erfindung sind in den Unteransprüchen, der Beschreibung und in den Figuren angegeben.

Vorzugsweise ist der Sendelichtstrahl koaxial bezüglich des Empfangspfades des zu erfassenden reflektierten oder remittierten Lichts vor dem fokussierenden Element angeordnet. Da über den Empfangspfad das Licht erfasst wird, das am Objekt diffus reflektiert oder remittiert wird, weist der Empfangspfad eine gewisse Breite auf, die durch die Abmessungen des fokussierenden Elements vorgegeben ist, um eine ausreichende Lichtintensität erfassen zu können. Bei dieser Ausführungsform der Erfindung verläuft der Sendelichtstrahl somit koaxial durch die geometrische Mitte des Empfangspfades. Durch eine solche Anordnung lassen sich die vorstehend beschriebenen Vorteile bezüglich der optischen Abbildung und des Signal-Rauschverhältnisses weiter verstärken.

Das Trennelement ist vorzugweise vollständig umlaufend um den Sendelichtstrahl herum angeordnet. Dadurch wird die vorstehend beschriebene optische Isolierung zwischen dem Sendelichtstrahl und dem Empfangspfad bzw. dem fokussierenden Element optimiert. Außerdem lässt sich ein vollständig umlaufendes Trennelement einfach und kostengünstig herstellen, und zwar beispielsweise in der Form eines Rohres oder Tubus.

Gemäß einer weiteren Ausführungsform der Erfindung sind der erste und/oder der zweite Abschnitt der Frontscheibe und/oder das Trennelement separate Teile, die durch Ultraschallschweißen miteinander verbunden sind, wobei die Frontscheibe und das Trennelement vorteilhafterweise aus Kunststoff hergestellt sind. Bevorzugt sind der erste Abschnitt der Frontscheibe, der zweite Abschnitt der Frontscheibe und das Trennelement jeweils separate Teile. Dies ermöglicht die gemeinsame Herstellung der Frontscheibe und des Trennelements als eine Vorbaugruppe, die anschließend innerhalb des Sensors montiert werden kann. Alternativ können der erste und zweite Abschnitt der Frontscheibe sowie das Trennelement mittels eines Spritzgussverfahrens hergestellt werden. Das Spritzgussverfahren ist dabei insbesondere ein Zwei-Komponenten-Spritzgussverfahren.

Gemäß einer weiteren Ausführungsform der Erfindung ist ein Lichtleiterelement zwischen dem fokussierenden Element und dem Detektionselement angeordnet. Ein solches Lichtleiterelement bewirkt eine Erhöhung der Intensität des Lichts, welches das Detektionselement erreicht, da bei Vorhandensein eines Lichtleiters weniger Licht aus dem Empfangspfad zwischen dem fokussierenden Element und dem Detektionselement herausgestreut werden kann. Darüber hinaus lässt sich die optische Abbildung des zu erfassenden Lichts auf einen gewünschten Bereich des Detektionselements mittels des Lichtleiterelements präzise einstellen, wodurch wiederum die Qualität des Messsignals verbessert werden kann.

Eine weitere Verbesserung des Signal-Rauschverhältnis des Messsignals des Sensors lässt sich dadurch erreichen, dass vorteilhafterweise zwischen dem fokussierenden Element und dem Detektionselement ein Bandpassfilter angeordnet ist. Das Bandpassfilter weist bevorzugt einen Transmissionsbereich für Lichtwellenlängen auf, der die Wellenlänge des von der Lichtquelle emittierten Lichts umfasst. Unerwünschtes Streulicht mit Wellenlängen außerhalb des Transmissionsbereichs kann hingegen durch das Bandpassfilter absorbiert werden und nicht zum Messsignal des Sensors beitragen.

Gemäß einer weiteren Ausführungsform der Erfindung ist eine Blende in einer Ebene angeordnet, in der das fokussierende Element ein Zwischenbild erzeugt. Mittels einer solchen Blende wird die Abbildung des zu erfassenden Lichts auf das Detektionselement weiter verbessert, da unerwünschtes Streulicht in der Ebene des Zwischenbildes an einer geeigneten Stelle ausgeblendet wird, an welcher der Empfangspfad für das zu erfassende Licht aufgrund der Fokussierung zum Zwischenbild minimale Abmessungen aufweist.

Das Detektionselement umfasst bevorzugt zumindest eine Avalanchephotodiode. Eine solche Photodiode ist zur Detektion geringer Lichtintensitäten besonders geeignet. Das Detektionselement ist dabei bevorzugt als ein Feld aus Einzelphotonen-Avalanchephotodioden (SPAD-Array) ausgebildet. Wie vorstehend erläutert wurde, ändert sich aufgrund der erfindungsgemäßen parallelen Ausrichtung des Sendelichtstrahls und des Empfangspfades die Position des ausgeleuchteten Bereichs bzw. Lichtflecks auf dem Detektionselement nur unwesentlich, wenn sich der Abstand zwischen dem Sensor und dem Objekt verändert. Dies ermöglicht den Einsatz des SPAD-Arrays mit hochempfindlichen Dioden und die Verringerung der Intensität den Sendelichtstrahls, da der ausgeleuchtete Bereich auf dem SPAD-Array eindeutig lokalisiert werden kann und bevorzugt nur diejenigen Dioden des SPAD-Arrays aktiviert werden, die innerhalb des ausgeleuchteten Bereichs bzw. Lichtflecks liegen. Mögliche Störsignale solcher Dioden des SPAD-Arrays, die sich außerhalb des Lichtflecks befinden, können hingegen durch geeignete Deaktivierung von Dioden unterdrückt werden.

Die Erfindung wird nachfolgend rein beispielhaft anhand möglicher Ausführungsformen der Erfindung unter Bezugnahme auf die beigefügten Figuren erläutert. Es zeigen:
- Fig. 1: eine perspektivische Schnittansicht eines erfindungsgemäßen Sensors,
- Fig. 2: eine Schnittansicht des Sensors von Fig. 1 und
- Fig. 3: einen Ausschnitt einer perspektivischen Schnittansicht des erfindungsgemäßen Sensors gemäß einer alternativen Ausführungsform.

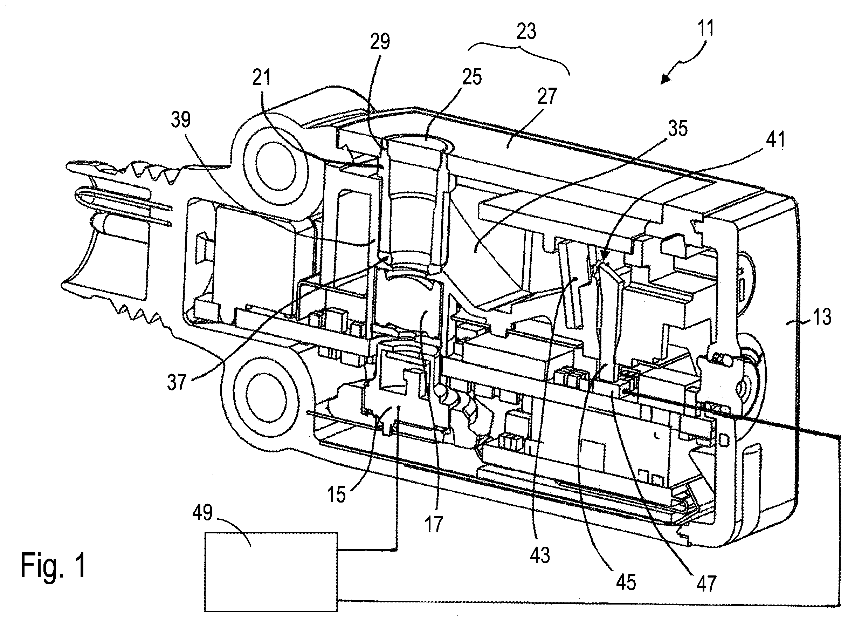

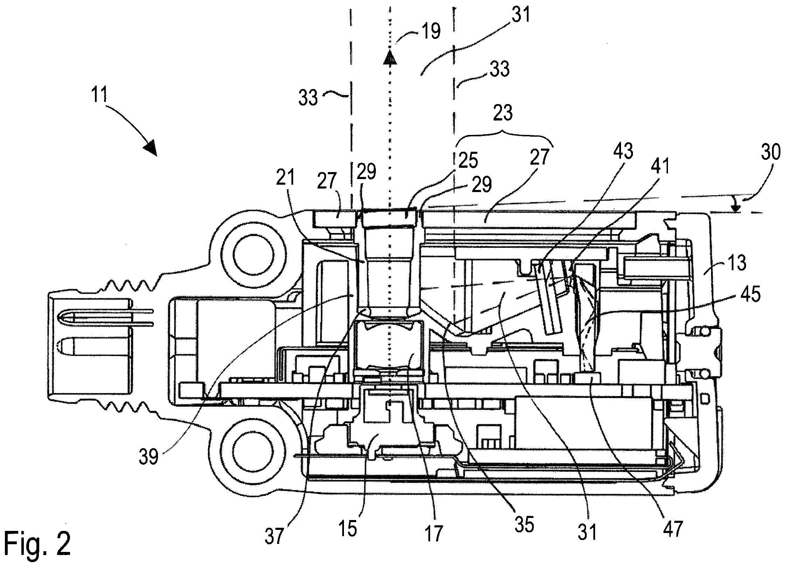

Fig. 1 zeigt einen erfindungsgemäßen Sensor 11, dessen Gehäuse 13 in Längsrichtung aufgeschnitten ist, in einer perspektivischen Darstellung. Innerhalb des Gehäuses 13 ist eine Laserdiode 15 angeordnet, die als Lichtquelle des Sensors 11 dient und oberhalb derer eine Linse 17 angeordnet ist. Mittels der Laserdiode 15 und der Linse 17 wird ein Sendelichtstrahl 19 erzeugt, der in Fig. 2 schematisch als gepunktete Linie dargestellt ist.

Oberhalb der Linse 17 verläuft der Sendelichtstrahl 19 durch ein Senderohr 21 und tritt anschließend durch eine Frontscheibe 23 aus dem Sensor 11 aus, welche das Gehäuse 13 gegenüber einem Außenraum abschließt. Das Senderohr 21 teilt die Frontscheibe 23 in einen ersten Abschnitt 25, der innerhalb des Senderohrs 21 angeordnet ist und durch den der Sendelichtstrahl 19 hindurchtritt, und einen zweiten Abschnitt 27 außerhalb des Senderohrs 21. Das Senderohr 21 bildet somit im Bereich der Frontscheibe 23 ein Trennelement 29 zwischen dem ersten Abschnitt 25 und dem zweiten Abschnitt 27 der Frontscheibe 23.

Wie am besten in Fig. 2 zu erkennen ist, ist der erste Abschnitt 25 der Frontscheibe bezogen auf den zweiten Abschnitt 27 leicht geneigt angeordnet. Die Oberflächen des ersten Abschnitts 25 und des zweiten Abschnitts 27 schließen dabei einen Winkel 30 von etwa 1 Grad ein. Durch diese Anordnung des ersten und zweiten Abschnitts 25, 27 unter dem Winkel 30 wird eine Reflexion von Licht aus dem Sendelichtstrahl 19 an der Frontscheibe 23 zurück in Richtung der Laserdiode 15 verhindert. Dadurch wird eine Störung des Sendelichtstrahls 19 aufgrund solcher Reflexionen vermieden, die beispielsweise durch eine weitere Reflexion des zurückreflektierten Lichts an glänzenden Teilen der Laserdiode 15 auftreten und Nebenlichtstrahlen erzeugen könnten. Außerdem könnten solche Rückreflexionen die Laserleistung beeinflussen, und zwar entweder direkt innerhalb eines Laserkristalls der Laserdiode 15 oder indirekt durch Auftreffen auf eine Monitordiode (nicht gezeigt), über welche die Laserleistung gesteuert wird.

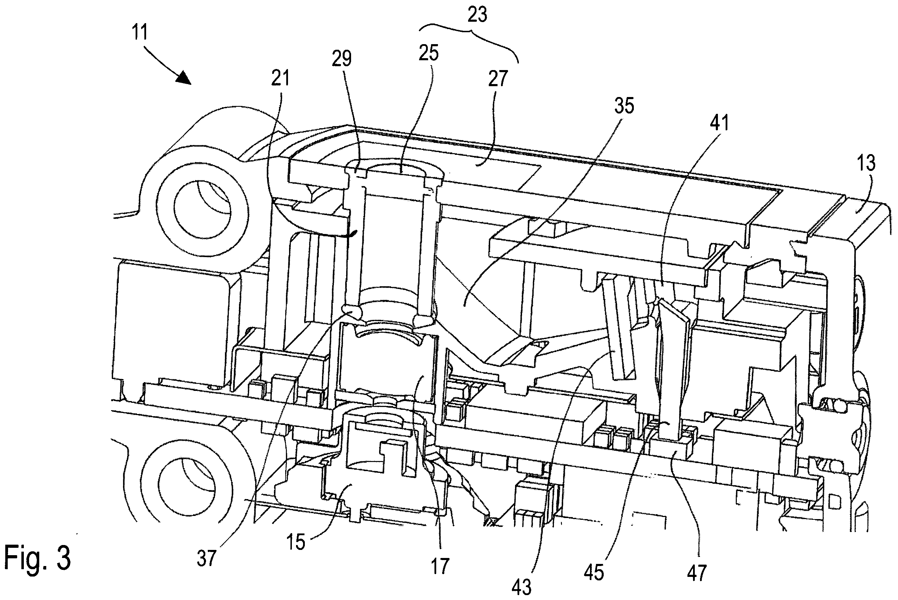

Wenn der Sendelichtstrahl 19 außerhalb des Gehäuses 13 des Sensors 11 auf ein Objekt (nicht gezeigt) trifft, wird der Sendelichtstrahl 19 an diesem reflektiert oder remittiert. Ein Teil dieses Lichts gelangt über einen Empfangspfad 31 zurück zur Frontscheibe 23 des Sensors 11. Der Empfangspfad 31 ist in Fig. 2 beispielhaft anhand zweier Lichtstrahlen 33 dargestellt. Das an dem Objekt reflektierte oder remittierte Licht gelangt ferner entlang des Empfangspfades 31 durch die Frontscheibe 23 hindurch auf einen Spiegel 35, der ein fokussierendes Element des Sensors 11 darstellt. Der Sensor 11 zeichnet sich dabei dadurch aus, dass der Spiegel 35 im Bereich des Senderohrs 21 angeordnet ist und diesen zumindest teilweise umgibt. Wie man in Fig. 1 und 3 erkennen kann, erstreckt sich der Spiegel 35 auch in Bereiche hinein, die in Blickrichtung von Fig. 1 und 3 hinter dem Senderohr 21 liegen.

Durch diese Anordnung des Spiegels 35 sind der Sendelichtstrahl 19 und der Empfangspfad 31 im Bereich vor dem Spiegel 35, d.h. in Fig. 1 und 3 oberhalb des Spiegels 35, im Wesentlichen parallel ausgerichtet. Der Sendelichtstrahl 19 verläuft dabei nahezu durch den Brennpunkt des Spiegels 35. Aufgrund der parallelen Ausrichtung des Empfangspfades 31 und des Sendelichtstrahls 19 weist der Spiegel 35 eine große Brennweite auf, die größer ist als bei Sensoren aus dem Stand der Technik, die als fokussierendes Element eine Linse verwenden.

Innerhalb des Gehäuses 13 ist der Sendelichtstrahl 19 mittels des Senderohrs 21 vollständig gegenüber dem Spiegel 35 und weiteren Komponenten des Sensors 11 optisch isoliert, die entlang des Empfangspfades 31 angeordnet sind. An der Unterseite des Senderohrs 21 ist zur optischen Isolierung zusätzlich ein Dichtelement 37 angeordnet. Außerdem dient das Dichtelement 37 zur Verbindung des Senderohrs 21 mit einem Trägerelement 39 (vgl. Fig. 2), in welchem auch die Linse 17 untergebracht ist. Ferner sorgt das Dichtelement 37 für einen Toleranzausgleich bei der Anordnung und Ausrichtung des Senderohrs 21.

Da das Senderohr 21 das Trennelement 29 zwischen dem ersten und zweiten Abschnitt 25, 27 der Frontscheibe 23 bildet, wird verhindert, dass Licht des Sendelichtstrahls 19 durch eine Reflexion oder Streuung in der Frontscheibe 23 innerhalb des Gehäuses 13 des Sensors 11 in den Empfangspfad 31 und insbesondere auf den Spiegel 35 gelangt. Das Trennelement 29 erstreckt sich zu diesem Zweck über den gesamten Querschnitt der Frontscheibe 23, d.h. bis zu dessen Außenfläche. Ein "optisches Übersprechen" zwischen dem Sendelichtstrahl 19 und dem Empfangspfad 31 wird somit durch die Isolierung des Sendelichtstrahls 19 mittels des Senderohrs 21 und des Dichtelements 37 und insbesondere durch das Trennelement 29 zwischen dem ersten und zweiten Abschnitt 25, 27 der Frontscheibe 23 verhindert.

Aufgrund der parallelen Ausrichtung des Empfangspfades 31 mit dem Sendelichtstrahl 19 kann die Brennweite des Spiegels 35 derart ausgewählt werden, dass ein Zwischenbild in einer Ebene erzeugt wird, in der eine Blende 41 angeordnet ist. Durch die Beschränkung des Empfangspfades 31 mittels der Blende 41 wird unerwünschtes Streulicht ausgeblendet, das beispielsweise durch Mehrfachreflexionen innerhalb des Gehäuses 13 entsteht. Zwischen dem Spiegel 35 und der Blende 41 ist ferner ein Bandpassfilter 43 angeordnet, durch welches nur Licht mit einer Wellenlänge in einem vorbestimmten Bereich hindurchtritt, der die Wellenlänge des von der Laserdiode 15 emittierten Lichts umfasst. Hinter der Blende 41 fällt das von dem Spiegel 35 erfasste Licht auf ein Lichtleiterelement 45, über welches das Licht schließlich auf ein Detektionselement 47 geleitet wird. Das Lichtleiterelement 45 ist nahezu parallel zum Sendelichtstrahl 19 ausgerichtet.

Eine Auswerteeinheit 49 des Sensors 11, die in Fig. 1 schematisch dargestellt ist, ist mit der Laserdiode 15 und dem Detektionselement 47 verbunden und steuert diese geeignet an, um die Laufzeit des Lichts zwischen der Laserdiode 15 und dem Detektionselement 47 zu ermitteln. Anhand der ermittelten Laufzeit bestimmt die Auswerteeinheit ferner mittels der Lichtgeschwindigkeit und unter Berücksichtigung der bekannten Abstände entlang des Empfangspfades 31 innerhalb des Gehäuses 13 des Sensors 11 den Abstand zwischen dem Sensor 11 und dem Objekt, an dem die Lichtstrahlen 33 reflektiert bzw. remittiert wurden.

Das Detektionselement 47 weist ein Feld von Einzelphotonen-Avalanchephotodioden auf, das auch als SPAD-Array bezeichnet wird (SPAD vom engl. "Single Photon Avalanche Diode"). Das SPAD-Array des Detektionselements 47 wird in einem bestimmten Bereich bzw. Lichtfleck über das Lichtleiterelement 45 mit Licht ausgeleuchtet, das mittels des Spiegels 35 erfasst wird und Licht des Sendelichtstrahls 19 umfasst, das an einem Objekt außerhalb des Gehäuses 13 des Sensors 11 reflektiert oder remittiert wurde. Aufgrund der parallelen Ausrichtung des Sendelichtstrahls 19 und des Empfangspfades 31 ändert sich dabei die Position des ausgeleuchteten Bereichs bzw. Lichtflecks auf dem Detektionselement 47 nur unwesentlich, wenn sich der Abstand zwischen dem Sensor 11 und dem Objekt verändert. Dadurch ist es möglich, dass zum Detektieren des Lichts mittels des Detektionselements 47 nur diejenigen Dioden des SPAD-Arrays aktiviert werden, die innerhalb des ausgeleuchteten Bereichs bzw. Lichtflecks liegen. Da die übrigen Dioden des SPAD-Arrays, die sich außerhalb des Lichtflecks befinden und daher lediglich unerwünschtes Streulicht erfassen würden, deaktiviert werden können, lässt sich das Signal-Rauschverhältnis eines Messsignals verbessern, das durch das Detektionselement 47 erzeugt wird.

Da der Spiegel 35 das Senderohr 21 und damit den Sendelichtstrahl 19 umgibt und somit der Spiegel 35 als fokussierendes Element des Sensors 11 im selben Raumbereich unterhalb der Frontscheibe 23 angeordnet ist wie der Sendelichtstrahl 19, ist der Winkel zwischen dem Sendelichtstrahl 19 und den Lichtstrahlen 33 minimiert, die entlang des Empfangspfades 31 nach einer Reflexion am Objekt wieder über die Frontscheibe 23 auf den Spiegel 35 gelangen. Durch die Minimierung dieses Winkels ist die Triangulation minimiert, die als Störeffekt bei bekannten Sensoren auftritt, bei denen der Sendelichtstrahl und ein fokussierendes Element, wie beispielsweise eine Linse, in der Form eines "Doppelauges" beabstandet und räumlich getrennt sind. Bei einer solchen Beabstandung fällt das am Objekt reflektierte Licht stets unter einem gewissen Winkel auf die Frontscheibe des Sensors, bevor es auf das fokussierende Element gelangt. Durch den Triangulationseffekt verschiebt sich daher der Lichtfleck auf dem Detektionselement, welcher durch das fokussierende Element auf diesem gebildet wird, wenn der Abstand zwischen dem Sensor und dem Objekt variiert. Ferner können durch die Triangulation Störeffekte auftreten, beispielsweise durch Mehrfachstreuungen von Licht innerhalb der Frontscheibe. Beim erfindungsgemäßen Sensor 11 hingegen sind die mit der Triangulation verbundenen Effekte aufgrund der parallelen Ausrichtung des Sendelichtstrahls 19 und des Empfangspfades 31 minimiert.

Aufgrund der gezeigten "Faltung" bzw. Umlenkung des Empfangspfades 31 unmittelbar hinter der Blende 41 mittels des Lichtleiterelements 45 ist innerhalb des Gehäuses 13 wenig Raum für den Empfangspfad 31 erforderlich, d.h. zwischen dem Spiegel 35 und dem Detektionselement 47, und zwar insbesondere im Vergleich zu Sensoren mit Linse gemäß dem Stand der Technik. Dadurch können die Abmessungen des Gehäuses 13 des Sensors 11 insgesamt verringert werden. Dies gilt vor allem für die Abmessung des Gehäuses 13 parallel zum Sendlichtstrahl 19.

Bei dem in Fig. 1 und 2 dargestellten Sensor 11 sind der erste und zweite Abschnitt 25, 27 der Frontscheibe 23 und das Senderohr 21 vor der Montage des Sensors 11 zunächst separate Teile. Diese werden jedoch bereits vor der Montage des Sensors 11 mittels einer Ultraschallschweißung zu einer Vorbaugruppe miteinander verbunden, die anschließend mit den weiteren Elementen des Sensors 11 montiert wird. Von dem in Fig. 1 und 2 dargestellten Sensor 11 unterscheidet sich der in Fig. 3 gezeigte Sensor 11 lediglich dadurch, dass das Senderohr 21 zusammen mit dem ersten und zweiten Abschnitt 25, 27 mittels eines Zwei-Komponenten-Spritzgusses hergestellt wird, bevor diese Elemente 21, 25 und 27 als Vorbaugruppe wiederum mit weiteren Komponenten des Sensors 11 verbunden werden. Auch bei dieser Herstellung der Vorbaugruppe mittels Zwei-Komponenten-Spritzguss ist eine geneigte Anordnung des ersten Abschnitts 25 der Frontscheibe 23 gegenüber dem zweiten Abschnitt 27 unter einem Winkel 30 von etwa 1 Grad vorgesehen.

### Bezugszeichenliste

- 11: Sensor
- 13: Gehäuse
- 15: Laserdiode
- 17: Linse
- 19: Sendelichtstrahl
- 21: Senderohr
- 23: Frontscheibe
- 25: erster Abschnitt der Frontscheibe
- 27: zweiter Abschnitt der Frontscheibe
- 29: Trennelement
- 30: Winkel
- 31: Empfangspfad
- 33: Lichtstrahl
- 35: Spiegel
- 37: Dichtelement
- 39: Trägerelement
- 41: Blende
- 43: Bandpassfilter
- 45: Lichtwellenleiter
- 47: Detektionselement
- 49: Auswerteeinheit

## Patentansprüche

1. Entfernungsmessender Sensor (11) mit
einer Lichtquelle (15) zur Erzeugung eines Sendelichtstrahls (19), zumindest ein fokussierendes Element (35) zum Erfassen von an einem Objekt reflektiertem oder remittiertem Licht des Sendelichtstrahls (19),
ein Detektionselement (47) zum Detektieren des durch das fokussierende Element (35) erfassten Lichts und
eine Auswerteeinheit (49), die ausgebildet ist, die Laufzeit des Lichts zwischen der Lichtquelle (15) und dem Detektionselement (47) zu ermitteln,
wobei der Sendelichtstrahl (19) und ein Empfangspfad (31) des zu erfassenden reflektierten oder remittierten Lichts vor dem fokussierenden Element (35) im Wesentlichen parallel zueinander ausgerichtet sind,
wobei der Sensor (11) eine Frontscheibe (23) aufweist, durch die der Sendelichtstrahl (19) und das zu erfassende reflektierte oder remittierte Licht hindurchtreten,
wobei die Frontscheibe (23) ein Trennelement (29) aufweist, das die Frontscheibe (23) in einen ersten Abschnitt (25), durch den der Sendelichtstrahl (19) hindurchtritt, und einen zweiten Abschnitt (27) aufteilt, durch den das zu erfassende reflektierte oder remittierte Licht hindurchtritt, und
wobei sich das Trennelement (29) in Richtung des Sendelichtstrahls (19) über den gesamten Querschnitt der Frontscheibe (23) erstreckt und
eine Oberfläche des zweiten Abschnitts (27) der Frontscheibe (23) rechtwinklig bezüglich des Sendelichtstrahls (19) angeordnet ist, **dadurch gekennzeichnet, dass**
eine Oberfläche des ersten Abschnitts (25) bezüglich der Oberfläche des zweiten Abschnitts (27) der Frontscheibe (23) geneigt ist und
das fokussierende Element (35) als Spiegel ausgebildet ist.

2. Sensor (11) nach Anspruch 1,
**dadurch gekennzeichnet, dass**
der Sendelichtstrahl (19) koaxial bezüglich des Empfangspfades (31) des zu erfassenden reflektierten oder remittierten Lichts vor dem fokussierenden Element (35) angeordnet ist.

3. Sensor (11) nach Anspruch 1 oder 2,
**dadurch gekennzeichnet, dass**
das Trennelement (29) vollständig umlaufend um den Sendelichtstrahl (19) herum angeordnet ist.

4. Sensor (11) nach zumindest einem der vorstehenden Ansprüche,
**dadurch gekennzeichnet, dass**
der erste und/oder der zweite Abschnitt (25, 27) der Frontscheibe (23) und/oder das Trennelement (29) separate Teile sind, die durch Ultraschallschweißen miteinander verbunden sind.

5. Sensor (11) nach zumindest einem der vorstehenden Ansprüche,
**dadurch gekennzeichnet, dass**
der erste und zweite Abschnitt (25, 27) der Frontscheibe (23) sowie das Trennelement (29) mittels eines Spritzgussverfahrens hergestellt sind.

6. Sensor (11) nach zumindest einem der vorstehenden Ansprüche,
**dadurch gekennzeichnet, dass**
ein Lichtleiterelement (45) zwischen dem fokussierenden Element (35) und dem Detektionselement (47) angeordnet ist.

7. Sensor (11) nach zumindest einem der vorstehenden Ansprüche,
**dadurch gekennzeichnet, dass**
eine Blende (41) in einer Ebene angeordnet ist, in der das fokussierende Element (35) ein Zwischenbild erzeugt.

8. Sensor (11) nach zumindest einem der vorstehenden Ansprüche,
**dadurch gekennzeichnet, dass**
das Detektionselement (47) zumindest eine Avalanchephotodiode umfasst.

9. Sensor (11) nach zumindest einem der vorstehenden Ansprüche,
**dadurch gekennzeichnet, dass**
das Detektionselement (47) als ein Feld aus Einzelphotonen-Avalanchephotodioden (SPAD-Array) ausgebildet ist.

## Claims

1. A distance measuring sensor (11) comprising
a light source (15) for generating a transmission light beam (19);
at least one focusing element (35) for detecting light of the transmission light beam (19) reflected or remitted at an object;
a detection element (47) for detecting the light detected by the focusing element (35); and
an evaluation unit (49) which is configured to determine the time of flight of the light between the light source (15) and the detection element (47),
wherein the transmission light beam (19) and a reception path (31) of the reflected or remitted light to be detected are aligned substantially in parallel with one another in front of the focusing element (35);
wherein the sensor (11) has a front screen (23) through which the transmission light beam (19) and the reflected or remitted light to be detected pass;
wherein the front screen (23) has a separation element (29) which divides the front screen (23) into a first section (25) through which the transmission light beam (19) passes and a second section (27) through which the reflected or remitted light to be detected passes; and
wherein the separation element (29) extends in the direction of the transmission light beam (19) over the total cross-section of the front screen (23) and
a surface of the second section (27) of the front screen (23) is arranged at a right angle with respect to the transmission light beam (19), **characterized in that**
a surface of the first section (25) is inclined with respect to the surface of the second section (27) of the front screen (23) and
the focusing element (35) is configured as a mirror.

2. A sensor (11) in accordance with claim 1,
**characterized in that**
the transmission light beam (19) is arranged coaxially with respect to the reception path (31) of the reflected or remitted light to be detected in front of the focusing element (35).

3. A sensor (11) in accordance with claim 1 or claim 2,
**characterized in that**
the separation element (29) is arranged completely peripherally around the transmission light beam (19).

4. A sensor (11) in accordance with at least one of the preceding claims,
**characterized in that**
the first and/or second section (25, 27) of the front screen (23) and/or the separation element (29) is/are separate parts which are connected to one another by ultrasonic welding.

5. A sensor (11) in accordance with at least one of the preceding claims,
**characterized in that**
the first and second sections (25, 27) of the front screen (23) and the separation element (29) are manufactured by means of an injection molding process.

6. A sensor (11) in accordance with at least one of the preceding claims,
**characterized in that**
a light conductor element (45) is arranged between the focusing element (35) and the detection element (47).

7. A sensor (11) in accordance with at least one of the preceding claims,
**characterized in that**
an aperture (41) is arranged in a plane in which the focusing element (35) produces an intermediate image.

8. A sensor (11) in accordance with at least one of the preceding claims,
**characterized in that**
the detection element (47) comprises at least one avalanche photodiode.

9. A sensor (11) in accordance with at least one of the preceding claims,
**characterized in that**
the detection element (47) is configured as a field of single photon avalanche photodiodes (SPAD array).

## Revendications

1. Capteur de mesure de distance (11) comportant
une source de lumière (15) pour générer un faisceau lumineux d'émission (19),
au moins un élément de focalisation (35) pour détecter la lumière du faisceau lumineux d'émission (19) réfléchie ou renvoyée d'un objet,
un élément de détection (47) pour détecter la lumière détectée par l'élément de focalisation (35), et
une unité d'évaluation (49) qui est réalisée pour déterminer le temps de parcours de la lumière entre la source de lumière (15) et l'élément de détection (47),
dans lequel
le faisceau lumineux d'émission (19) et un trajet de réception (31) de la lumière réfléchie ou renvoyée à détecter sont orientés de manière sensiblement parallèle l'un à l'autre devant l'élément de focalisation (35),
le capteur (11) comprend une vitre frontale (23) qui est traversée par le faisceau lumineux d'émission (19) et par la lumière réfléchie ou renvoyée à détecter,
la vitre frontale (23) comprend un élément de séparation (29) qui divise la vitre frontale (23) en une première portion (25) traversée par le faisceau lumineux d'émission (19) et en une seconde portion (27) traversée par la lumière réfléchie ou renvoyée à détecter, et
l'élément de séparation (29) s'étend dans la direction du faisceau lumineux d'émission (19) sur toute la section transversale de la vitre frontale (23), et une surface de la seconde portion (27) de la vitre frontale (23) est disposée à angle droit par rapport au faisceau lumineux d'émission (19), **caractérisé en ce que**
une surface de la première portion (25) est inclinée par rapport à la surface de la seconde portion (27) de la vitre frontale (23), et
l'élément de focalisation (35) est réalisé sous forme de miroir.

2. Capteur (11) selon la revendication 1,
**caractérisé en ce que**
le faisceau lumineux d'émission (19) est disposé coaxialement par rapport au trajet de réception (31) de la lumière réfléchie ou renvoyée à détecter devant l'élément de focalisation (35).

3. Capteur (11) selon la revendication 1 ou 2,
**caractérisé en ce que**
l'élément de séparation (29) est disposé tout autour du faisceau lumineux d'émission (19).

4. Capteur (11) selon l'une au moins des revendications précédentes,
**caractérisé en ce que**
la première et/ou la seconde portion (25, 27) de la vitre frontale (23) et/ou l'élément de séparation (29) sont des pièces séparées assemblées entre elles par soudage par ultrasons.

5. Capteur (11) selon l'une au moins des revendications précédentes,
**caractérisé en ce que**
les première et seconde portions (25, 27) de la vitre frontale (23) et l'élément de séparation (29) sont fabriqués par un procédé de coulée par injection.

6. Capteur (11) selon l'une au moins des revendications précédentes,
**caractérisé en ce que**
un élément de guidage de lumière (45) est disposé entre l'élément de focalisation (35) et l'élément de détection (47).

7. Capteur (11) selon l'une au moins des revendications précédentes,
**caractérisé en ce que**
un diaphragme (41) est disposé dans un plan dans lequel l'élément de focalisation (35) génère une image intermédiaire.

8. Capteur (11) selon l'une au moins des revendications précédentes,
**caractérisé en ce que**
l'élément de détection (47) comprend au moins une photodiode à avalanche.

9. Capteur (11) selon l'une au moins des revendications précédentes,
**caractérisé en ce que**
l'élément de détection (47) est réalisé sous la forme d'un champ de photodiodes à avalanche à photon unique (réseau SPAD).
